Europäisches Patentamt

European Patent Office

Office européen des brevets

(19)

(11) **EP 0 993 125 A2**

(12) **EUROPEAN PATENT APPLICATION**

(43) Date of publication:
**12.04.2000 Bulletin 2000/15**

(51) Int Cl.[7]: **H04B 1/30**, H04B 1/707

(21) Application number: **99307631.4**

(22) Date of filing: **28.09.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **06.10.1998 US 167118**<br><br>(71) Applicant: **LUCENT TECHNOLOGIES INC.**<br>**Murray Hill, New Jersey 07974-0636 (US)** | (72) Inventors:<br>• **Ma, Zhengxiang**<br>  **Summit, New Jersey 07901 (US)**<br>• **Rittenhouse, George E.**<br>  **Holmdel, New Jersey 07733 (US)**<br>• **Wu, Hui**<br>  **C55 North Plainfield, New Jersey 07060 (US)**<br><br>(74) Representative:<br>**Buckley, Christopher Simon Thirsk et al**<br>**Lucent Technologies Inc.,5 Mornington Road**<br>**Woodford Green, Essex IG8 0TU (GB)** |

(54) **A Quadrature low-if homodyne radio receiver**

(57)    A single-ended homodyne receiver demodulates quadrature signals containing spectral nulls by using an extremely low intermediate-frequency that normally would create substantial self-interference. This is accomplished by judiciously placing the spectral nulls over the critical sections of the signal spectrum, ensuring that the self-interference is minimized. As an example, a direct-sequence CDMA signal that was constructed with not more than one half the available Walsh functions is demodulated directly by placing the intermediate frequency such that spectral nulls in the CDMA signal overlap the spectral peaks in the desired signal, thereby eliminating the self-interference. This single-ended homodyne receiver can be implemented using either integrated or discrete components.

**Description**

**Background of the Invention**

This invention relates to radio receivers.

Radio receivers typically include an intermediate-frequency conversion stage to relax the RF filtering requirements and improve overall performance. In such receivers the incoming signal is filtered, mixed with a local-oscillator carrier, $f_{LO}$, that is offset in frequency from the carrier frequency, $f_c$, filtered again at the intermediate frequency with a narrow-band channel-select filter, and mixed down to baseband (0 Hz) for further processing. Additional filtering is required before each multiplication stage to reduce the interference generated by the image signal. One of the dominant costs in these receivers are these filters. Filters with high rates of attenuation between the pass bands and the attenuated bands, and with large out-of-band attenuation are typically very expensive. The intermediate frequency, $f_{IF} = f_c - f_{LO}$, is designed to be much lower than the carrier frequency and is chosen to minimize the necessary quality factor of these filters.

The two most important effects, when determining the intermediate frequency, are the signal image interference, where the interferer is $f_{IF}$ away from the desired signal, and the half-IF interference, where the interferer is $f_{IF}/2$ away from the desired signal. The mixing process itself generates the first interfering signal, while the second interfering signal is generated by the mixer's $4^{th}$ order non-linearity. Any signals at these two frequencies, including noise, will mix directly onto the desired signal at $f_{IF}$. Hence, it is necessary to attenuate these interferers prior to the mixing process. If the intermediate frequency is large, then an additional mixing stage is typically necessary to bring the signal down to baseband. On the other hand, if the intermediate frequency is small, then these interferers are relatively close to the desired signal and high-Q filter are required to minimize the interference. If the intermediate frequency is actually less than the signal bandwidth itself, then the interfering image resides within the desired signal spectrum and can not be filtered at all. Such self-interference can be substantial.

Because of the half-IF interference, the intermediate frequency is generally chosen to be at least twice the channel bandwidth. In wideband applications (60 MHz for Personal Communication Systems) this places $f_{IF}$ at or above 120 MHz. At such a high frequency it is very difficult to directly sample this IF signal with the required resolution. Instead, the signal is usually mixed again to baseband (0 Hz) or sub-sampled. Of course, the additional mixing stage requires more components and an additional local oscillator. Sub-sampling the signal eliminates these additional components but requires an expensive analog-to-digital converter (ADC), and mixes in more noise, reducing the signal-to-noise ratio.

In a homodyne receiver, a large fraction of these radio components can be eliminated without significantly degrading the receiver performance by modulating the signal from RF directly to baseband. This receiver does not require the high-performance ADC found in sub-sampled receivers or the second analog mixing stage found in conventional superheterodyne front-ends. However, in its standard single-ended implementation this architecture can not demodulate quadrature (I&Q) signals. This is a severe limitation since most modem digital modulation techniques use quadrature modulation. This homodyne receiver architecture can be extended to included quadrature demodulation with a single quadrature RF mixer. However, for quadrature signals there are usually very restrictive phase and amplitude imbalance specifications beween these two signal paths. Use of such an architecture necessitates that not only the front-end mixer but also subsequent gain stages must be integrated together onto a single RF integrated circuit chip. Currently, there are no such circuits operating above 1.9 GHz.

**Summary**

While self-interference normally precludes the use low intermediate frequencies with high bandwidth information signals, we realized that even quadrature signals can be demodulated using an extremely low intermediate-frequency when such signals have spectral nulls. This is accomplished by judiciously placing the spectral nulls over the critical sections of the signal spectrum, ensuring that the self-interference is minimized. The chosen intermediate frequency is low enough to be sampled directly with conventional ADCs, which premits using a single very low-cost low-pass channel select filter. As an example, a direct-sequence CDMA signal contains periodic spectral nulls and peaks. This quadrature signal can be demodulated directly by placing the intermediate frequency such that these spectral nulls overlap the desired spectral peaks, thereby eliminating the self-interference. It is not necessary, however, that the null exists completely throughout the wanted signal spectrum. Since the optimum receiver contains an integrate-and-dump circuit to recover the signal, the nulls can be much smaller in bandwidth than the desired signal spectrum. The interference can still integrate to zero. This single-ended homodyne receiver can be implemented using either integrated or discrete components.

## Brief Description of the Drawings

FIG. 1 presents a block diagram of a receiver comporting with the principles disclosed herein;

FIG. 2 presents illustrative spectrums at different stages of a receiver and for different IF frequencies; and

FIG. 3 presents an approximation of the baseband power spectrum of a 16 kbs signal in a CDMA system that employs only the lower or upper half of the available Walsh codes.

## Detailed Description

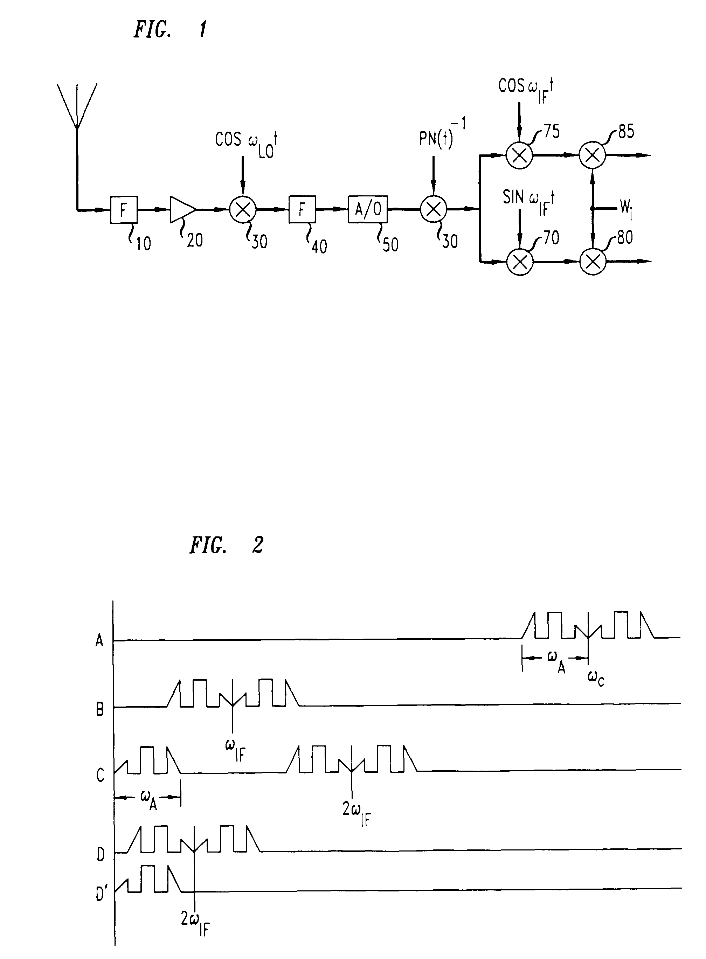

FIG. 1 depicts a homodyne receiver architecture adapted to receive a quadrature modulated CDMA signal, a(t)+jb(t), that has been modulated onto a carrier. Illustratively, the FIG. 1 low IF receiver is adapted to receive a signal of the form

$$s(t) = PN(t)d(t)e^{j\omega_c t} \tag{1}$$

where $PN(t)=PN_I(t)+jPN_Q(t)$ is a complex pseudo-random sequence, $d(t)=a(t)+jb(t)$ is a complex data signal for the I and Q channels respectively, and $\omega_c=2\pi f_c$ is the RF carrier frequency. More specifically, the signal d(t) is a combination of quadrature signals from N users, with the signal of each user, $i$, multiplied by $W_i$, where $W_i$ is the $i^{th}$ Walsh function. Thus,

$$a(t) = \sum_{i=1}^{N} I_i(t)W_i \tag{2}$$

and

$$b(t) = \sum_{i=1}^{N} Q_i(t)W_i \tag{3}$$

where $I_i(t)$ and $Q_i(t)$ are the quadrature data sequences of user $i$.

Functionally the FIG. 1 architecture is similar to a single-ended homodyne receiver, except that it has a small, but non-zero, intermediate frequency. This architecture performs well without catastrophic effects due to self-interference because the CDMA signal contains spectral nulls.

We realized that the positions of spectral nulls in CDMA signal are both predictable and repeatable, if the number of users is less than or equal to ½ of the available Walsh functions. By incorporating this as a requirement, as well as the additional requirement that the used Walsh codes must reside entirely within a code sub-group, we achieved good performance for the FIG. 1 circuit. As a simple example, the upper or lower half of the complete code set represents an acceptable code-subgroup.

Walsh functions do not spread the data spectrum uniformly across the frequency band. Instead, the ideal Walsh function spectrum is a unique sequence of delta functions. When a Walsh function is multiplied by the data sequence, the data signal spectrum is simply translated throughout this band around each delta function.

Demodulation occurs when this sequence is further multiplied by the desired user Walsh function, $W_i$, where i is the user whose signal is to be demodulated.

A Walsh function subgroup is a collection of Walsh functions such that the product of any two functions in the subgroup yields another function in the subgroup. Consequently, if the used Walsh functions of a system reside entirely within a subgroup that has nulls in certain frequency positions, then the product of any two functions in the system results in a signal that has nulls in the same frequency positions. Conversely, if the assigned codes are in different subgroups, then the resulting product $W_i W_u$ may not have the same null positions and would destroy the predictability of these spectral nulls. This would make it difficult to determine an intermediate frequency without self-interference. One of the largest sub-groups are the upper and lower halves of the code set.

The RF section of the receiver shown in FIG. 1 comprises an incoming wideband filter 10 followed by RF amplifier 20 and modulator 30 operating at a frequency very close to $f_c$. The resulting output signal of modulator 30 is

$$r_{IF}(t) = \frac{1}{2}PN(t)d(t)e^{j\omega_{IF}t}. \qquad (4)$$

The receiver section ends with the channel-select filter 40, which removes both the high-frequency mixing components as well as any adjacent channel interferers. After the signal of equation (1) is received by filter 10 and amplified by amplifier 20, it is then applied to both modulator 30 and low-pass filter 40, so that the result at the output of filter 40 is given by

$$r(t)=\frac{1}{2}PN(t)d(t)d(t)e^{j\omega_{IF}t} \qquad (5)$$

Since the intermediate frequency is very low, typically less than 100 kHz, the signal can be directly digitized with ADC 50.

The output of ADC 50 is applied to multiplier 60 which multiplies the signal by a of pseudorandom sequence $PN(t)^{-1}$, which is a sequence that is synchronized to the $PN(t)$ sequence and is the complex conjugate thereof. The synchronization of the receiver's $PN^{-1}(t)$ sequence to that of the transmitter's is conventional and does not form part of this invention.

Using modulators 70 and 75 the signal is finally mixed down to baseband in quadrature with the resulting signal given by

$$r(t) = r_I(t)+r_Q(t) \qquad (6)$$

Where

$$r_I(t)=\frac{1}{4}[a(t)+a(t)\cos(2\omega_{IF}t)+b(t)\sin(2\omega_{IF}t)] \qquad (7)$$

$$r_Q(t)=\frac{1}{4}[b(t)+a(t)\sin(2\omega_{IF}t)-b(t)\cos(2\omega_{IF}t)] \qquad (8)$$

The last two terms in each equation, involving $2\omega_{IF}$, are interference signals and generally reduce the signal to noise ratio significantly. The result of this demodulation is illustrated graphically by segment B of FIG. 2 for the signal presented in segment A. As can be seen from segments A, B, and C of FIG. 2, when the intermediate frequency is greater than the bandwidth of the signal, $\omega_A$, the spectrum centered around the interfering frequency, $2\omega_{IF}$, does not overlap with the desired baseband signal and hence can be removed with filtering. In this case there is no additional interference when demodulating the signal.

Until here, FIG. 1 shows a classical prior art approach which suffers from a problem that arises when a low intermediate-frequency is used. In this case, part of the interfering spectrum centered about $2\omega_{IF}$ overlaps the desired signal and can not be removed with filtering. As previously discussed, it would be very desirable if this self-interference could be minimized while still using a single-ended, low intermediate-frequency receiver because it greatly simplifies the radio design.

We discovered that if the signal spectrum has predictable nulls within the spectrum, then a low intermediate frequency can be used if the intermediate frequency is chosen such that the nulls in the interfering signal spectrum, that being the spectrum portion that is centered about $2\omega_{IF}$, are placed over peaks in the desired baseband signal spectrum. This is illustrated by segment D in FIG. 2.

More generally, any signal where in the course of demodulating and/or filtering can be arranged to cancel, or ignore, interfering signals centered about $2\omega_{IF}$, then an intermediate frequency which is lower than the signal bandwidth can be employed. As a simple example for which the principles of this invention apply, if the desired signal is a CDMA signal that is coded in a particular way, the shape of the spectrum has both predictable and repeatable nulls within it, and the demodulation process is such that the above-state condition is satisfied.

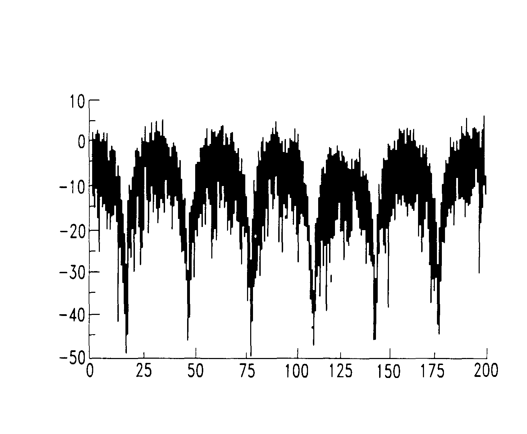

Specifically, as indicated above, the Walsh code spreads the signal but does not spread it uniformly throughout the signal spectrum, $\omega_A$. In fact, the resulting CDMA signal spectrum is far from being uniformly distributed when only half of the Walsh function set is used. For example, the spectrum resulting from only using the lower half of the Walsh function set, e.g., $W_0$ to $W_{127}$ in a set of 256 Walsh codes, results in a spectrum with nulls as depicted in FIG.3.

Recovering a signal which has been constructed using CDMA involves multiplying the received signal $r(t)$ by the appropriate Walsh function ($W_u$) and integrating the result over a symbol period. Recovery of the desired signal is effected because

$$W_i W_j = \begin{cases} 1 & i = j \\ W_k & i \neq j, k \neq 0 \end{cases} \qquad (9)$$

and the integral of $W_k$ over a symbol period is 0.

The fact that the desired signal is recovered from a spectrum containing nulls, and which in the remaining portion contains the signal information, suggests that the signal can still be recovered when other signals are present in spectrum portions that are not considered; i.e. in the nulls. It can be shown that this indeed is the case for CDMA. That is, it can be shown that if the spectral nulls of the signal corresponding to $a(t)$ and $b(t)$, are placed over the spectral peaks of this signal, the desired signal can be recovered in the usual way of multiplying $r(t)$ by the Walsh function $W_i$, where $i$ is the user whose signal is to be recovered, and integrating the result. Specifically, we have found that for a 16 kbs signal, the peaks appear in the spectrum between the nulls, i.e. at 32n kHz where n=0,1,2.... Accordingly, the best selection for the intermediate frequency, when the lower half of the available Walsh functions is used as the subgroup is one where the following equation holds,

$$4\pi f_{IF} = 32n + 16 \qquad (10)$$

where $n$ is an integer, and the frequencies are in kHz. This is shown in FIG. 3. The best selection for the intermediate frequency when the upper half of the available Walsh functions is used as the subgroup is one where the following equation holds,

$$4\pi f_{IF} = 32n$$

where $n$ is an integer, and the frequencies are in kHz. The equation will be somewhat different for different subgroups.

In consonance with the above, FIG. 1 includes a $PN(t)^{-1}$ multiplier 60 to yield the signal of equation (5), followed by demodulators 70 and 75 which multiply the signal of equation (5) by $\cos(\omega_{IF}t)$ and $\sin(\omega_{IF}t)$ respectively. The output of demodulators 70 and 75 are applied to elements 80 and 85 which multiply the input signals by $W_i$ and integrate it over the symbol period. That is, elements 80 and 85 integrate their incoming signals over a symbol period, sample the result, and reinitialize the integral to zero. Because of the "integrate and dump" operation of elements 80 and 85, it turns out the principles of this invention work well even when the nulls portions of the spectrum that is centered about $2\omega_{IF}$ do not completely cover the desired signal spectrum.

Thus, the above discloses an arrangement where a novel demodulator is employed to demodulate an applied signal that corresponds to a baseband signal of bandwidth $\omega_A$ was modulated with a signal having frequency $\omega_c$. The demodulator demodulates the applied signal with frequency $\omega_{LO}$, where $\omega_c + \omega_A > w_{LO} > \omega_c - \omega_A$, and $\omega_{LO} \neq \omega_c$, yielding thereby an IF signal that corresponds to the baseband signal modulated with frequency $\omega_{IF} = \omega_c - \omega_{LO}$.

**Claims**

1. A receiver comprising:

   a demodulator, responsive to an applied signal that corresponds to a baseband signal of bandwidth $\omega_A$ that was modulated with a signal having frequency $\omega_c$, where the demodulator demodulates the applied signal with frequency $\omega_{LO}$, where $\omega_c + \omega_A > \omega_{LO} > \omega_c - \omega_A$, and $\omega_{LO} \neq \omega_c$, yielding thereby an IF signal that corresponds to said baseband signal modulated with frequency $\omega_{IF} = \omega_c - \omega_{LO}$, the IF signal having a lower sideband and an upper sideband; and

a filter coupled to said modulator.

2. The receiver of claim **1** further comprising a second demodulator, coupled to said filter and employing a demodulation frequency of $\omega_{IF}$, to form a baseband signal and a signal that corresponds to said baseband signal modulated by frequency $2\,\omega_{IF}$

3. The receiver of claim **2** further comprising a processor interposed between said filter and said second demodulator, transforming the output signal of said filter to yield spectrum nulls in said lower and upper sidebands of said IF signal.

4. The receiver of claim **1** further comprising an A/D converter responsive to said filter.

5. The receiver of claim **1** further comprising transform means responsive to output signals of said filter.

6. The receiver of claim **5** where said transform means includes a processor for transforming the output signal of said filter to form said IF signal with spectrum nulls in the lower and upper sidebands.

7. The receiver of claim **6** where said processor multiplies the output signal of said filer by a pseudo-random sequence.

8. The receiver of claim **7** where said transform means includes an A/D converter interposed between said filter and said processor.

9. The receiver of claim **6** further comprising:

a second demodulator responsive to said transform means, forming a baseband signal with baseband spectrum nulls, a lower sideband signal that has spectrum null and which is lower in frequency than and adjacent to frequency $2\omega_{IF}$, and a higher sideband signal that has spectrum null and which is higher in frequency than and adjacent to frequency $2\,\omega_{IF}$

where frequency $\omega_{LO}$ is such that $\omega_c > \omega_{LO} > \omega_c - \omega_A$, and adjusted so that spectrum nulls of the lower sideband signal are situated at other than said spectrum nulls of said baseband signal.

10. The receiver of claims **9** where said $\omega_{LO}$ is adjusted so that spectrum nulls of the lower sideband signal straddle the spectrum nulls of said baseband signal.

11. The receiver of claims **9** where said $\omega_{LO}$ is adjusted so that a spectrum null of the lower sideband signal are positioned half way between two nulls in the baseband signal.

12. The receiver of claim **6** further comprising:

a second demodulator responsive to said transform means, forming a baseband signal with baseband spectrum nulls, a lower sideband signal that has spectrum null and which is lower in frequency than and adjacent to frequency $2\omega_{IF}$, and a higher sideband signal that has spectrum null and which is higher in frequency than and adjacent to frequency $2\,\omega_{IF}$

where frequency $\omega_{LO}$ is such that $\omega_c < \omega_{LO} < \omega_c + \omega_A$, and adjusted so that spectrum nulls of the higher sideband signal are situated at other than said spectrum nulls of said baseband signal.

13. The receiver of claim 6 where said processor multiplies output signals of said A/D converter by a pseudorandom $PN(t)^{-1}$ sequence.

14. The receiver of claim 13 where said $PN(t)^{-1}$ sequence is the inverse of a $PN(t)$ sequence embedded in said applied signal and synchronized therewith.

15. The receiver of claim 1 where signal applied to said demodulator is a CDMA signal, and the receiver further comprises

an A/D converter following said filter;
multiplier for multiplying an output signal of said A/D converter by a pseudorandom $PN(t)^{-1}$ sequence;
a second demodulator, coupled to said multiplier, employing a demodulation frequency of $\omega_{IF}$.

16. The receiver of claim 15 further comprising code multiplication circuitry for multiplying output signals of said means for multiplying by a code sequence.

FIG. 1

FIG. 2